# EUROPÄISCHE PATENTSCHRIFT

(11) **EP 0 393 313 B1**
(45) Veröffentlichungstag und Bekanntmachung des Hinweises auf die Patenterteilung: **09.06.1993**
(21) Anmeldenummer: 90102215.2
(22) Anmeldetag: 05.02.1990
(51) Int. Cl.: H04N 5/445

(54) **Einrichtung zur gleichzeitigen Darstellung von Textdienstinformationen und Benutzerführungsinformationen auf einem Breitformat-Fernsehbildschirm**
Device for simultaneous display of text information and user instructions on a wide format television screen
Dispositif d'affichage simultané d'informations de texte et d'instructions pour l'usager sur un grand écran de télévision

(30) Priorität: 19.04.1989 DE 3912805
(43) Veröffentlichungstag der Anmeldung: 24.10.1990
(73) Patentinhaber: GRUNDIG E.M.V. Elektro-Mechanische Versuchsanstalt Max Grundig holländ. Stiftung & Co. KG., D-90762 Fürth (DE)
(72) Erfinder: Hegendörfer, Max, Dipl.-Ing., Grundig E.M.V., D-8510 Fürth/Bay (DE)

(56) Entgegenhaltungen:
- EP-A- 0 326 339
- DE-A- 3 228 354

## Beschreibung

Die Erfindung betrifft eine Einrichtung zur gleichzeitigen Darstellung von Textdienstinformationen und Benutzerführungsinformationen mit den im Oberbegriff des Anspruchs 1 angegebenen Merkmalen.

Aus der Zeitschrift "Funkschau", Heft 3/1988, Seiten 46 bis 49, ist das sogenannte "TOP"-Verfahren bekannt. Dieses Verfahren soll den Benutzern eine sichere, einfache und auch größtenteils gegenüber herkömmlichen Fernsehtext-Decodern schnellere Anwahl von Fernsehtextseiten ermöglichen. Dazu werden die einzelnen Fernsehtextseiten eines Senders in Blöcke und Gruppen unterteilt. Diese Blöcke und Gruppen können unter Verwendung von farbigen Tasten auf einer Fernbedienung angewählt werden, so daß die bis dahin übliche umständliche Anwahl jeder Fernsehtextseite durch Eingabe mehrerer Ziffern entfallen kann. Zur Benutzerführung wird beim bekannten Verfahren am oberen oder unteren Bildschirmrand eine farbige Kommentarzeile eingeblendet. Diese Kommentarzeile zeigt dem Benutzer in alphanumerischer Form von links nach rechts beispielsweise die Bezeichnung des gerade gewählten Blocks, die Bezeichnung der nächsten Gruppe dieses Blocks und den Titel des nächsten Blocks.

Wendet man das bekannte Verfahren bei den heute benutzten Fernsehempfängern an, welche ein Bildbreiten- zu Bildhöhenverhältnis von 4:3 haben, so ergeben sich Nachteile. Denn zur Darstellung der Benutzerführungsinformationen auf dem Bildschirm muß am oberen oder unteren Rand des Bildschirms ein Teil der eigentlich darzustellenden Fernsehtextinformation ausgeblendet werden. Folglich ist im bekannten Fall stets ein Kompromiß zwischen der Ausführlichkeit der Benutzerführungsinformationen auf dem Bildschirm und der Menge der auszublendenden Textinformation zu finden.

Die Aufgabe der Erfindung besteht darin, eine Einrichtung der im Oberbegriff des Anspruchs 1 angegebenen Art derart weiterzubilden, daß ausführliche Benutzerführungsinformationen auf dem Bildschirm dargestellt werden können, ohne daß ein Teil der darzustellenden Textdienstinformation ausgeblendet werden muß.

Diese Aufgabe wird bei einer Einrichtung der im Oberbegriff des Anspruchs 1 angegebenen Art durch die im kennzeichnenden Teil des Anspruchs 1 angegebenen Merkmale gelöst. Vorteilhafte Ausgestaltungen sind Gegenstand der Unteransprüche.

Die Vorteile der Erfindung beruhen insbesondere darauf, daß bei der Darstellung der Fernsehtextseite auf einem Bildschirm, dessen Bildbreiten- zu Bildhöhenverhältnis größer ist als das heute übliche, nicht vom heute üblichen Fernsehtext-Darstellformat abgewichen wird. Dadurch bleiben an den Rändern des Breitbild-Fernsehbildschirms Flächen frei, welche für die Darstellung ausführlicher Benutzerführungsinformationen genutzt werden können.

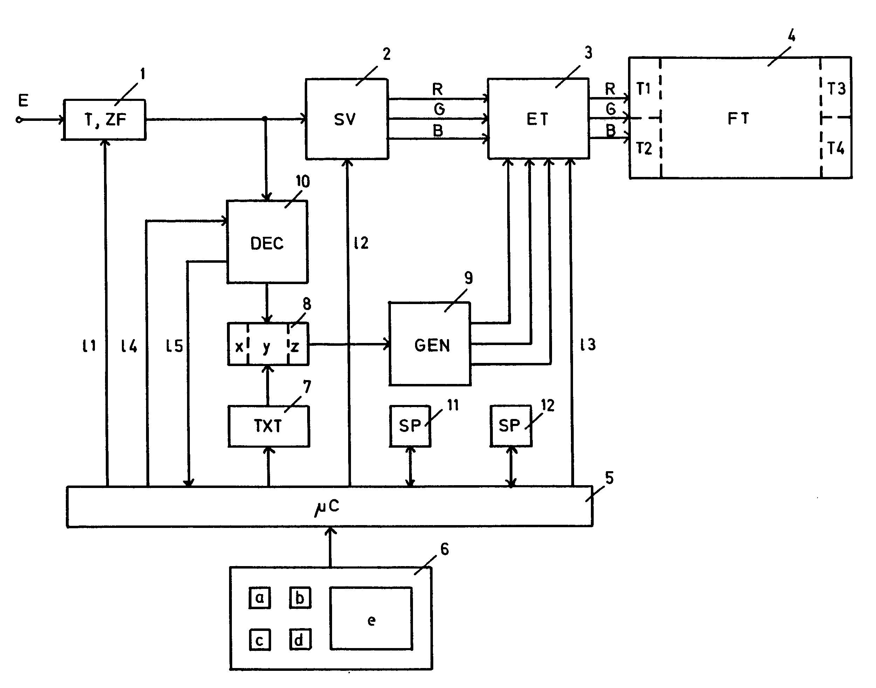

Weitere vorteilhafte Eigenschaften der Erfindung ergeben sich aus der Erläuterung eines Ausführungsbeispiels anhand der einzigen Figur.

Dem Eingang E der in der Figur gezeigten Schaltung wird ein Fernsehsignal zugeführt. Bei diesem Fernsehsignal handelt es sich beispielsweise um ein Satelliten-Fernsehsignal, welches vom Ausgang eines Satelliten-Empfängers abgeleitet ist, oder ein PAL-Farbfernsehsignal. Das Bildbreiten- zu Bildhöhenverhältnis dieses Farbfernsehsignals beträgt 16:9 oder 4:3.

Dieses Farbfernsehsignal wird einer Tuner- und ZF-Stufe 1 zugeführt, deren Ausgangssignal an eine Signalverarbeitungsschaltung 2 weitergeleitet wird. Handelt es sich bei dem am Eingang E anliegenden Signal um ein Satelliten-Fernsehsignal, dann besteht die Aufgabe der Signalverarbeitungsschaltung 2 im wesentlichen darin, die im Zeitmultiplex übertragenen Signalkomponenten in zur Darstellung auf dem Bildschirm geeignete RGB-Signale umzuwandeln. Handelt es sich bei dem am Eingang E anliegenden Signal hingegen um ein PAL-Farbfernsehsignal, dann besteht die Aufgabe der Signalverarbeitungsschaltung 2 im wesentlichen darin, das PAL-codierte Signal in zur Darstellung auf dem Bildschirm geeignete RGB-Signale umzuwandeln.

Die RGB-Ausgangssignale der Signalverarbeitungsschaltung 2 werden im normalen Wiedergabebetrieb dem Bildschirm 4 über eine Eintastschaltung 3 zugeführt.

Die Arbeitsweise der Tuner- und ZF-Stufe 1, der Signalverarbeitungsschaltung 2 und der Eintastschaltung 3 werden über die Steuerleitungen l₁, l₂ und l₃ von einem Mikrocomputer 5 gesteuert. Diese Steuerung erfolgt in Abhängigkeit von Bedienungsinformationen, welche dem Mikrocomputer 5 von einem Bedienteil 6 zugeführt werden. Das Bedienteil 6 enthält Tasten a, b, c und d, deren Bedeutung unten erläutert wird, sowie einen Tastenblock e, welcher die üblichen Funktionstasten sowie eine Zehnertastatur enthält.

Wird nun mittels einer der genannten Funktionstasten des Bedienteils 6 vom normalen Wiedergabebetrieb in den Fernsehtextbetrieb umgeschaltet, dann steuert der Mikrocomputer 5 über die Leitung l₄ den Fernsehtextdecoder 10 derart an, daß dieser die im Rahmen des Fernsehtextdienstes des momentan gewählten Senders angebotenen Seiten "TOP-Leitseite" und "Zusatzinformationstabelle" extrahiert. Die in diesen Seiten enthaltenen Informationen werden dem Mikrocomputer 5 über die Leitung l₅ zugeführt und von diesem in Speichern 11 und 12 abgelegt.

Die in diesen Seiten enthaltenen Informationen sind unter anderem Kennungen dafür, welche Seiteninhalte bzw. -themen momentan direkt anwählbar sind und ob es sich bei der jeweiligen Seite um die erste Seite eines Blocks, die erste Seite einer Gruppe oder eine normale Seite handelt.

Der Mikrocomputer 5 steuert den Hilfstextbaustein 7, in welchem die Benutzerführungsinformationen bereitgestellt werden, derart an, daß die Benutzerführungsinformationen, beispielsweise in Form ASCII-codierter Daten, zur Verfügung gestellt werden. Die Benutzerführungsinformationen enthalten Informationen darüber, welche Blöcke im Rahmen des Fernsehtextdienstes des momentan gewählten Senders angeboten werden (z.B. die Blöcke "Nachrichten", "Sport", TV-Programme" und "Sonstiges"). Die Benutzerführungsinformationen werden in einem ersten Speicherbereich x, z des Speichers 8 abgelegt. Das Auslesen der Benutzerführungsinformationen aus dem ersten Speicherbereich x, z des Speichers 8 erfolgt derart, daß die Benutzerführungsinformation innerhalb einer Zeile des Fernsehsignals im Zeitmultiplex mit weiteren in einem zweiten Speicherbereich y des Speichers 8 abgelegten Daten vorliegen. Bei diesen Daten handelt es sich um die Fernsehtext-Informationsübersichtsseite, d.h. die eigentliche, momentan angewählte Fernsehtextinformation.

Die aus dem Speicher 8 ausgelesenen Signale werden in einem Zeichengenerator 9, welcher den Auslesetakt für den Speicher 8 liefert, in RGB-Signale umgewandelt und über die Eintastschaltung 3 dem Bildschirm 4 zugeführt, welcher ein Bildbreiten- und Bildhöhenverhältnis von 16:9 hat.

Wegen des genannten Zeitmultiplexes werden die Benutzerführungsinformationen links und rechts eines 4:3-Ausschnittes des Bildschirms in Feldern T₁, T₂, T₃ und T₄ dargestellt, wie es in der Figur gezeigt ist. Das Feld T₁ ist beispielsweise rot hinterlegt und enthält den Schriftzug "Nachrichten". Das Feld T₂ ist beispielsweise grün hinterlegt und enthält den Schriftzug "Sport". Das Feld T₃ ist beispielsweise blau hinterlegt und enthält den Schriftzug "TV-Programme". Das Feld T₄ ist beispielsweise gelb hinterlegt und enthält den Schriftzug "Sonstiges".Zusätzlich enthält jedes der Felder T₁, T₂, T₃ und T₄ im Klartext Hinweise auf die nächstfeinere Untergliederung des jeweiligen Themenbereiches. Diese Informationen kann sich der Mikrocomputer 5 beispielsweise aus der "Zusatzinformationstabelle" verschaffen.

Die Anwahl einer gewünschten Fernsehtextseite erfolgt durch Betätigung einer der Tasten a, b, c oder d des Bedienteils 6. Jede der Tasten a, b, c und d ist einem der auf dem Bildschirm dargestellten Felder T₁, T₂, T₃ und T₄ zugeordnet und hat dieselbe Farbe wie das zugehörige Feld.

Wird beispielsweise zur Anwahl des Blocks "Nachrichten" die Taste a betätigt, so wird dies vom Mikrocomputer 5 erkannt. Dieser ermittelt aus der TOP-Leitseite die darzustellende Fernsehtextseite, initiiert die Abspeicherung der zugehörigen Daten im Speicherbereich y des Speichers 8 und ermittelt die der gewählten Seite zugeordneten Hilfsinformationen, aus der die Benutzerführungsinformationen abgeleitet werden. Diese werden - wie bereits oben beschrieben - über den Hilfstextbaustein 7 in den Speicherbereichen x und z des Speichers 8 abgelegt.

Der Auslesevorgang der im Speicher 8 abgespeicherten Daten wird derart gesteuert, daß die Benutzerführungsinformationen und die Fernsehtextdaten innerhalb der einzelnen Fernsehzeilen im Zeitmultiplex vorliegen. Die aus dem Speicher 8 ausgelesenen Signale werden in einem Zeichengenerator 9 in RGB-Signale umgewandelt und über die Eintastschaltung 3 dem 16:9-Bildschirm 4 zugeführt. Die Darstellung der Fernsehtextdaten auf dem 16:9-Bildschirm 4 erfolgt im Format 4:3 in der Bildschirmmitte. Die Darstellung der Benutzerführungsinformationen erfolgt in Feldern T₁, T₂, T₃ und T₄ links und rechts von der Fernsehtextinformation.

Bei einem derartigen Vorgehen ist es nicht notwendig, zur Darstellung von Benutzerführungsinformationen Teile der Fernsehtextinformation auszublenden. Ferner hat die 4:3-Darstellung des Textes, die kompatibel ist mit dem für Fernsehtext definierten Breiten- zu Höhenverhältnis (EBU), den Vorteil, daß im Falle von Grafik-Darstellung keine Abbildungsverzerrungen erfolgen.

Alternativ zu der vorstehend beschriebenen Ausführungsform der Erfindung kann das Auslesen der Daten aus dem Speicher 8 auch derart gesteuert werden, daß die Fernsehtextdaten am linken Rand und die Benutzerführungsinformationen am rechten Rand des 16:9-Bildschirms dargestellt werden, oder daß die Fernsehtextdaten am rechten Rand und die Benutzerführungsinformationen am linken Rand des 16:9-Bildschirms dargestellt werden.

Ferner kann zur Darstellung der Benutzerführungsinformationen in den Feldern T₁, T₂, T₃ und T₄ auch die Farbe der in den Feldern dargestellten Schrift der Farbe der jeweils zugehörigen Taste a, b, c oder d auf der Bedieneinheit 6 entsprechen.

Das vorstehend beschriebene Ausführungsbeispiel wurde anhand von Fernsehtextdarstellung unter Verwendung des TOP-Verfahrens erläutert. Alternativ hierzu ist die Erfindung auch anwendbar beim sogenannten FLOF-Verfahren, in welchem die Zusatzinformationen ohnehin außerhalb des Darstellformates übertragen werden ("ghost-rows"), und bei der Darstellung von BTX-Informationen.

## Patentansprüche

1. Einrichtung zur gleichzeitigen Darstellung von Textdienstinformationen und Benutzerführungsinformationen auf einem Fernsehbildschirm mit
- einer Bedieneinheit zur Anwahl einer gewünschten Textdienstseite,
- einem Textdienstdecoder, der die mittels der Bedieneinheit angewählte Textdienstseite decodiert,
- einem Hilfstextbaustein zur Bereitstellung von Benutzerführungsinformationen,
- einem Speicher zur Abspeicherung von den decodierten Textdienstinformationen entsprechenden Daten und von den Benutzerführungsinformationen entsprechenden Daten,
- einem Zeichengenerator zur Umwandlung der Ausgangssignale des Speichers in auf dem Fernsehbildschirm darstellbare Signale, und
- einer Steuerschaltung,
**dadurch gekennzeichnet**, daß
- der Fernsehbildschirm ein Breitbildfernsehbildschirm (4) mit einem ersten Breiten- zu Höhenverhältnis ist, und
- der Auslesevorgang der im Speicher (8) abgespeicherten Daten derart gesteuert wird, daß die Textdienstinformationen auf dem Breitbildfernsehbildschirm in einem zweiten Breiten- zu Höhenverhältnis dargestellt werden, welches kleiner ist als das erste Breiten- zu Höhenverhältnis und daß die Benutzerführungsinformationen innerhalb der Fernsehzeilen im Zeitmultiplex mit den Textdienstinformationen vorliegen und in den von den Textdienstinformationen nicht genutzten Bereichen des Breitbildfernsehbildschirms dargestellt werden.

2. Einrichtung nach Anspruch 1, **dadurch gekennzeichnet**, daß der Auslesevorgang der im Speicher abgespeicherten Daten derart gesteuert wird, daß die Textdienstinformationen im mittleren Bereich des Bildschirms und die Benutzerführungsinformationen am linken und rechten Rand des Bildschirms dargestellt werden.

3. Einrichtung nach Anspruch 1, **dadurch gekennzeichnet**, daß der Auslesevorgang der im Speicher abgespeicherten Daten derart gesteuert wird, daß die Textdienstinformationen am linken Rand und die Benutzerführungsinformationen am rechten Rand des Bildschirms dargestellt werden.

4. Einrichtung nach Anspruch 1, **dadurch gekennzeichnet**, daß der Auslesevorgang der im Speicher abgespeicherten Daten derart gesteuert wird, daß die Textdienstinformationen am rechten Rand und die Benutzerführungsinformationen am linken Rand des Bildschirms dargestellt werden.

5. Einrichtung nach einem oder mehreren der Ansprüche 1 bis 4, **dadurch gekennzeichnet**, daß
- die Bedieneinheit (6) zur Anwahl der Textseiten verschiedenfarbige Tasten (a,b,c,d) aufweist,
- die auf dem Bildschirm (4) dargestellten Benutzerführungsinformationen in verschiedenfarbigen Feldern (T₁, T₂, T₃, T₄) dargestellt werden,
- jeder der Tasten (a,b,c,d) ein gleichfarbiges Feld (T₁, T₂, T₃, T₄) zugeordnet ist,
- und jedes Feld in alphanumerischer Form Informationen über die mittels der zugeordneten Taste anwählbare Textseite enthält.

6. Einrichtung nach einem oder mehreren der Ansprüche 1 bis 4, **dadurch gekennzeichnet**, daß
- die Bedieneinheit (6)zur Anwahl der Textseiten verschiedenfarbige Tasten (a,b,c,d) aufweist,
- die auf dem Bildschirm (4) dargestellten Benutzerführungsinformationen in Felder (T₁, T₂, T₃ T₄) aufgeteilt sind,
- jeder der Tasten (a,b,c,d) eines der Felder (T₁, T₂, T₃, T₄) zugeordnet ist,
- und jedes Feld in alphanumerischer Form Informationen über die mittels der zugeordneten Taste anwählbare Textseite enthält, wobei die in alphanumerischer Form dargestellten Informationen in der gleichen Farbe dargestellt werden wie sie die zugeordnete Taste aufweist.

## Claims

1. Device for simultaneously displaying text service information and user guidance information on a television screen, having
- a control unit for selecting a desired text service page,
- a text service decoder which decodes the text service page selected by means of the control unit,
- a help text module for providing user guidance information,
- a memory for storing data corresponding to the decoded text service information and data corresponding to the user guidance information,
- a character generator for converting the output signals of the memory into signals that can be displayed on the television screen, and
- a control circuit,
characterised in that
- the television screen is a wide-format television screen (4) with a first width to height ratio, and
- the reading-out operation of the data stored in the memory (8) is controlled in such a way that the text service information is displayed on the wide-format television screen in a second width to height ratio which is smaller than the first width to height ratio, and in that the user guidance information is present in the television lines in time-division multiplex with the text service information, and is displayed in the areas of the wide-format television screen not used by the text service information.

2. Device according to Claim 1, characterised in that the reading-out operation of the data stored in the memory is controlled in such a way that the text service information is displayed in the centre area of the screen and the user guidance information is displayed on the left and right side of the screen.

3. Device according to Claim 1, characterised in that the reading-out operation of the data stored in the memory is controlled in such a way that the text service information is displayed on the left side and the user guidance information is displayed on the right side of the screen.

4. Device according to Claim 1, characterised in that the reading-out operation of the data stored in the memory is controlled in such a way that the text service information is displayed on the right side and the user guidance information is displayed on the left side of the screen.

5. Device according to one or more of Claims 1 to 4, characterised in that
- the control unit (6) has differently coloured keys (a, b, c, d) for selecting the text pages,
- the user guidance information displayed on the screen (4) is displayed in differently coloured fields (T₁, T₂, T₃, T₄),
- each of the keys (a, b, c, d) is assigned a field (T₁, T₂, T₃, T₄) of the same colour,
- and each field contains information in alphanumeric form about the text page that can be selected by means of the associated key.

6. Device according to one or more of Claims 1 to 4, characterised in that
- the control unit (6) has differently coloured keys (a, b, c, d) for selecting the text pages,
- the user guidance information displayed on the screen (4) is divided into fields (T₁, T₂, T₃, T₄),
- each of the keys (a, b, c, d) is assigned one of the fields (T₁, T₂, T₃, T₄),
- and each field contains information in alphanumeric form about the text page that can be selected by means of the associated key, the information displayed in alphanumeric form being displayed in the same colour as the associated key.

## Revendications

1. Dispositif pour affichage simultané d'informations en mode vidéotex et d'informations de guidage d'utilisateur sur un écran de télévision ayant
- un module de manoeuvre pour choisir une page de service vidéotex souhaitée,
- un décodeur vidéotex qui décode la pape vidéotex choisie au moyen du module de manoeuvre,
- un module de texte d'aide pour la mise à disposition d'informations de guidage d'utilisateur
- une mémoire pour le stockage de données correspondant aux informations vidéotex décodées et de données correspondant aux informations de guidage d'utilisateur,
- un générateur de caractères pour la conversion des signaux de sortie de la mémoire en signaux affichables sur l'écran, et
- un circuit de commande,
caractérisé en ce que
- l'écran de télévision est un écran de télévision à image large (4) avec un premier rapport de largeur à hauteur, et
- le processus de lecture des données stockées dans la mémoire (8) est commandé de sorte que les informations vidéotex sur l'écran de télévision à image large sont affichées dans un deuxième rapport de largeur à hauteur qui est inférieur au premier rapport de largeur à hauteur, et que les informations de guidage d'utilisateur se présentent à l'intérieur des lignes de télévision sous forme de multiplexage dans le temps avec les informations vidéotex et sont affichées dans les zones de l'écran de télévision à image large non utilisées par les informations vidéotex.

2. Dispositif selon la revendication 1, caractérisé en ce que le processus de lecture des données stockées dans la mémoire est commandé de manière que les informations de service vidéotex sont affichées dans la zone centrale de l'écran et que les informations de guidage d'utilisateur sont affichées sur les côtés gauche et droit de l'écran.

3. Dispositif selon la revendication 1, caractérisé en ce que le processus de lecture des données stockées dans la mémoire est commandé de manière que les informations de service vidéotex sont affichées sur le côté gauche de l'écran et que les informations de guidage d'utilisateur sont affichées sur le côté droit de l'écran.

4. Dispositif selon la revendication 1, caractérisé en ce que le processus de lecture des données stockées dans la mémoire est commandé de manière que les informations de service vidéotex sont affichées sur le côté droit de l'écran et que les informations de guidage d'utilisateur sont affichées sur le côté gauche de l'écran.

5. Dispositif selon une ou plusieurs des revendications précédentes, caractérisé en ce que
- le module de manoeuvre (6) pour le choix des pages de texte présente des touches (a, b, c, d) de couleurs différentes,
- les informations de guidage d'utilisateur affichées sur l'écran (4) sont affichées dans des zones de couleurs différentes (T₁, T₂, T₃, T₄),
- chacune des touches (a, b, c, d) est associée à une zone (T₁, T₂, T₃, T₄) de même couleur,
- et chaque zone contient sous forme alphanumérique des informations sur la page de texte pouvant être sélectionnée au moyen de la touche associée.

6. Dispositif selon une ou plusieurs des revendications 1 à 4, caractérisé en ce que
- le module de manoeuvre (6) pour le choix des pages de texte présente des touches (a, b, c, d) de couleurs différentes,
- les informations de guidage d'utilisateur affichées sur l'écran (4) sont réparties dans des zones (T₁, T₂, T₃, T₄),
- chacune des touches (a, b, c, d) est associée à une zone (T₁, T₂, T₃, T₄),
- et chaque zone contient des informations sous forme alphanumérique sur la page de texte pouvant être sélectionnée au moyen de la touche associée, les informations affichées sous la forme alphanumérique étant affichées dans la même couleur que celle que présente la touche associée.
